# EUROPEAN PATENT APPLICATION

(11) **EP 4 550 477 A1**
(43) Date of publication of application: **07.05.2025**
(21) Application number: 22956131.1
(22) Date of filing: 26.08.2022
(51) Int. Cl.: H01M 4/62, H01M 4/13

(54) **LITHIUM SUPPLEMENTING PASTE, POSITIVE ELECTRODE PASTE, SECONDARY BATTERY, PREPARATION METHOD FOR SECONDARY BATTERY, AND ELECTRIC DEVICE**

(71) Applicant: Contemporary Amperex Technology Co., Limited, Ningde, Fujian 352100 (CN)
(72) Inventor: XU, Yue, Ningde, Fujian 352100 (CN); LI, Keqiang, Ningde, Fujian 352100 (CN); XIE, Bin, Ningde, Fujian 352100 (CN); CHEN, Shitong, Ningde, Fujian 352100 (CN)
(74) Representative: Gong, Jinping
(86) International application number: PCT/CN2022/115188
(87) International publication number: WO 2024/040585

(57) **Abstract**

This application provides a lithium supplement slurry, a positive electrode slurry, a secondary battery, a secondary battery preparation method, and an electrical device. The lithium supplement slurry includes a lithium supplement additive and a phosphate ester compound. The lithium supplement slurry uses a phosphate ester compound as a solvent. The phosphate ester compound is stable at a normal temperature, and does not react with the lithium supplement additive. Therefore, in a positive electrode slurry that uses the phosphate ester compound for supplementing lithium, the phosphate ester compound does not make the positive electrode slurry prone to gel, but makes the slurry meet performance requirements on an industrial mass-produced slurry, and makes it easy to apply the slurry to form a coating layer. In addition, the phosphate ester compound is of low toxicity and high safety in production.

## Description

### TECHNICAL FIELD

This application relates to the field of battery technology, and in particular, to a lithium supplement slurry, a positive electrode slurry, a secondary battery, a secondary battery preparation method, and an electrical device.

### BACKGROUND

In a lithium-ion supercapacitor and a lithium-ion battery system, a carbonaceous lithiated negative electrode incurs irreversible lithiation (some lithium is consumed by formation of an SEI film on a negative electrode surface) to some extent during a first charge-and-discharge cycle. As a result of such an electrochemical action, the same number of moles of electrolyte solution anions are irreversibly adsorbed on a surface of an activated carbon positive electrode, or some lithium on the positive electrode is lost, thereby eventually leading to a decrease in an ion concentration of an electrolyte solution and a decline in the capacity of the positive electrode, and impairing the charge and discharge performance and capacity of the lithium-ion supercapacitor and the lithium-ion battery system.

### SUMMARY

In view of the above problems, this application provides a lithium supplement slurry, a positive electrode slurry, a secondary battery, a secondary battery preparation method, and an electrical device. When the lithium supplement slurry is used in a battery preparation process, the energy density of the battery is increased at the same time that good processing performance and electrochemical performance are achieved.

A first aspect of this application provides a lithium supplement slurry, including a lithium supplement additive and a phosphate ester compound.

The lithium supplement slurry uses a phosphate ester compound as a solvent. The phosphate ester compound is stable at a normal temperature, and does not react with the lithium supplement additive. Therefore, in a positive electrode slurry that uses the phosphate ester compound for supplementing lithium, the phosphate ester compound does not make the slurry prone to gel, but makes the positive electrode slurry meet performance requirements on an industrial mass-produced slurry, and makes it easy to apply the supply to form a coating layer. In addition, the phosphate ester compound is of low toxicity and high safety in production.

In any embodiment of the first aspect, the phosphate ester compound includes a phosphate triester compound. Optionally, the phosphate ester compound includes triethyl phosphate and/or trimethyl phosphate. All such phosphate ester compounds are liquid substances highly flowable at a normal temperature, and are of relatively high chemical stability, thereby ensuring uniformity of the slurry applied on a device.

In any embodiment of the first aspect, the lithium supplement additive includes at least one of lithium nitride Li₃N, lithium ferrite Li₅FeO₄, lithium nickelate Li₂NiO₂, or lithium oxide Li₂O. In the lithium supplement slurry of this application, the lithium supplement additive does not react with the solvent, thereby avoiding gelation of the lithium supplement slurry. Preferably, the lithium supplement additive necessarily contains lithium nitride. The decomposition rate of lithium nitride in the lithium-nitride-containing positive electrode plate formed by applying the lithium supplement slurry of this application is relatively high. Therefore, the capacity exerted by the lithium nitride is relatively high.

In any embodiment of this first aspect, a mass percent of the lithium supplement additive in the lithium supplement slurry is 0.75% to 4.32%, and optionally 0.88% to 2.08%, thereby providing a sufficient dosage of the lithium supplement additive for the positive electrode slurry.

A second aspect of this application provides a positive electrode slurry. The positive electrode slurry includes a positive active material and a lithium supplement slurry. The lithium supplement slurry is the lithium supplement slurry according to any embodiment of the first aspect.

The lithium supplement slurry uses a phosphate triester compound as a solvent. The phosphate triester compound is stable at a normal temperature, and does not react with the lithium supplement additive. Therefore, in a positive electrode slurry that uses the phosphate triester compound for supplementing lithium, the phosphate ester compound does not make the positive electrode slurry prone to gel, but makes the slurry meet performance requirements on an industrial mass-produced slurry, and makes it easy to apply the slurry to form a coating layer. In addition, the phosphate triester compound is of low toxicity and high safety in production.

In any embodiment of the second aspect, a mass percent of the lithium supplement additive in relation to the positive active material is 1% to 10%, and optionally 1% to 3%, thereby implementing sufficient pre-lithiation for the negative electrode, and ensuring a high capacity density of the positive electrode material.

In any embodiment of the second aspect, the mass percent of the phosphate ester compound in the positive electrode slurry is 50% to 70%, and optionally 52% to 58%; and/or, a mass percent of the lithium supplement additive in the positive electrode slurry is 0.45% to 2.88%, and further optionally 0.46% to 1.20%. When values fall within such ranges, the formed positive electrode slurry is of a moderate viscosity and easy to apply, thereby improving the drying efficiency of the applied slurry.

In any embodiment of the second aspect, the positive electrode slurry further includes a binder and/or a conductive agent.

A third aspect of this application provides a secondary battery. The secondary battery includes a positive electrode plate, a negative electrode plate, and a separator. The positive electrode plate includes a positive current collector and a positive film layer disposed on a surface of the positive current collector. The positive film layer includes a positive active material, a lithium supplement additive, and a phosphate ester compound.

In a process of forming the positive film layer by using the positive electrode slurry, residual solvent inevitably exists. The residual solvent of the positive film layer in the secondary battery of this application is a phosphate ester compound. That is, the positive electrode slurry that forms the positive film layer uses a phosphate ester compound as a solvent. The phosphate ester compound is stable at a normal temperature, and does not react with the lithium supplement additive, and therefore, will not cause gelation of the positive electrode slurry. Therefore, the positive electrode slurry of this application meets performance requirements on an industrial mass-produced slurry. The lithium supplement additive in the positive film layer of the secondary battery of this application is evenly dispersed and dissolved at a relatively high decomposition rate, and can exert a sufficient lithium supplementation effect.

In any embodiment of the third aspect, the mass percent of the phosphate ester compound in the positive film layer is less than or equal to 2%. Such a residual amount does not affect the performance of the secondary battery. In any embodiment of the third aspect, the phosphate ester compound includes a phosphate triester compound. Optionally, the phosphate ester compound includes triethyl phosphate and/or trimethyl phosphate. All such phosphate ester compounds are liquid substances highly flowable at a normal temperature, and are of relatively high chemical stability, thereby ensuring uniformity of the slurry applied on a device.

In any embodiment of the third aspect, a thickness of the positive film layer is 40 µm to 60 µm, and optionally 45 µm to 55 µm. In the positive film layer of a thickness falling within the above range, the decomposition rate of the lithium supplement additive is relatively high, and therefore, improves the lithium supplement effect.

In any embodiment of the third aspect, the lithium supplement additive includes one or more of lithium nitride, lithium ferrite, lithium nickelate, or lithium oxide. Optionally, a mass percent of the lithium supplement additive in the positive film layer is 0.95% to 8.68%, and further optionally 0.96% to 2.83%. In the lithium supplement slurry of this application, the lithium supplement additive does not react with the solvent, thereby avoiding gelation of the lithium supplement slurry. Preferably, the lithium supplement additive necessarily contains lithium nitride. The decomposition rate of lithium nitride in the lithium-nitride-containing positive electrode plate formed by applying the lithium supplement slurry of this application is relatively high. Therefore, the capacity exerted by the lithium nitride is relatively high.

In any embodiment of the third aspect, after the battery is initially charged, an average decomposition rate of the lithium supplement additive is greater than or equal to 60%, and optionally 62% to 94%. In this way, the lithium supplementation effect of the lithium supplement additive is exerted sufficiently.

A fourth aspect of this application provides a secondary battery preparation method, including a preparation process of a positive electrode plate. The preparation process of the positive electrode plate includes: applying the positive electrode slurry according to any one of the foregoing embodiments onto a positive current collector, and drying the slurry to obtain the positive electrode plate.

With the phosphate ester compound used as a solvent in the positive electrode slurry, the phosphate ester compound is stable at a normal temperature, and does not react with the lithium supplement additive, and therefore, the positive electrode slurry is not prone to gelation. Therefore, the performance of the positive electrode slurry of this application meets requirements on an industrial mass-produced slurry. The lithium supplement additive in the positive film layer of the secondary battery formed by using such a slurry is evenly dispersed and dissolved at a relatively high decomposition rate, and can exert a sufficient lithium supplementation effect. In addition, the phosphate ester compound is of low toxicity and high safety in production.

In any embodiment of the fourth aspect, a solid content of the positive electrode slurry is 30% to 60%, and optionally 40% to 50%. This facilitates coating without causing a heavy burden on subsequent drying.

In any embodiment of the fourth aspect, the drying is performed in an inert gas, and optionally, the inert gas is nitrogen or argon. The decomposition rate of the lithium supplement additive in the positive film layer of the secondary battery obtained by drying the slurry in an inert gas is relatively high, and therefore, the lithium supplementation effect is better.

In any embodiment of the fourth aspect, the drying is performed in a vacuum environment. Optionally, a vacuum pressure of the vacuum environment is -20 KPa to -90 KPa. This can also achieve a relatively high decomposition rate of the lithium supplement additive.

A fifth aspect of this application provides an electrical device, including a secondary battery. The secondary battery is selected from the secondary battery according to any one of the foregoing embodiments or a secondary battery prepared by the preparation method according to any one of the foregoing embodiments. The electrical device containing the secondary battery of this application exhibits a higher specific capacity and higher initial-charge performance of the secondary battery.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic diagram of a secondary battery according to an embodiment of this application;
FIG. 2 is an exploded view of a secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electrical device that uses a secondary battery as a power supply according to an embodiment of this application.

The drawings are not drawn to scale.

List of reference numerals:
1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

The following describes and discloses in detail a lithium supplement slurry, a positive electrode slurry, a secondary battery, a secondary battery preparation method, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, all and any of the following conditions satisfy the condition "A or B" : A is true (or existent) and B is false (or absent); A is false (or absent) and B is true (or existent); and, both A and B are true (or existent).

### [Lithium supplement slurry]

To improve the energy density of a battery, some technical solutions in the art are to add a lithium supplement as an additive to a positive film layer. However, as an inherent problem, the lithium supplement additive is of low compatibility with aprotic polar solvents, and is prone to react with common solvents such as N-methyl-2-pyrrolidone (NMP), thereby resulting in gelation of a slurry, and making it difficult to apply the slurry. In particular, the gelation of the positive electrode slurry caused by a strongly alkaline lithium supplement additive represented by lithium nitride is particularly severe.

To solve the difficulty of applying the gelled slurry, an embodiment of this application provides a lithium supplement slurry as a positive electrode slurry. The positive electrode slurry includes a lithium supplement additive and a phosphate ester compound.

Unless otherwise specified, a solvent in this application is in a liquid state at a normal temperature, as understood by a person skilled in the art. For example, the phosphate ester compound used as a solvent is a phosphate ester compound in a liquid state at a normal temperature.

In a case that the phosphate ester compound is used as a solvent, the phosphate ester compound is stable at a normal temperature, and does not react with the lithium supplement additive, and therefore, will not cause gelation of the lithium supplement slurry. In this way, the positive electrode slurry containing the phosphate ester compound meets performance requirements on an industrial mass-produced slurry and is easy to apply to form a coating layer. In addition, the phosphate ester compound is of low toxicity and high safety in production.

As mentioned above, a fundamental method for avoiding gelation of the lithium supplement slurry is to avoid reactions between the solvent and the lithium supplement additive. Therefore, the lithium supplement additive may be caused to, in its original state, enter the positive film layer formed by the positive electrode slurry, so as to ensure the high decomposition rate of the lithium supplement additive in the positive film layer to implement efficient pre-lithiation of the negative electrode.

Different phosphate ester compounds in this application vary in the physical and chemical properties. In some embodiments, the phosphate ester compound includes a phosphate triester compound. Optionally, the phosphate ester compound includes triethyl phosphate and/or trimethyl phosphate. All such phosphate triester compounds are liquid substances highly flowable at a normal temperature, and are of relatively high chemical stability, thereby ensuring uniformity of the slurry applied on a device.

The lithium supplement additive used herein may be any lithium supplement additive capable of achieving a lithium supplementation effect. In some embodiments, the lithium supplement additive includes at least one of lithium nitride Li₃N, lithium ferrite Li₅FeO₄, lithium nickelate Li₂NiO₂, or lithium oxide Li₂O. In the lithium supplement slurry of this application, the lithium supplement additive does not react with the solvent, thereby avoiding gelation of the lithium supplement slurry. Preferably, the lithium supplement additive necessarily contains lithium nitride. The decomposition rate of lithium nitride in the lithium-nitride-containing positive electrode plate formed by applying the lithium supplement slurry of this application is relatively high. Therefore, the capacity exerted by the lithium nitride is relatively high.

In some embodiments, a mass percent of the lithium supplement additive in the lithium supplement slurry is 0.75% to 4.32%, and optionally 0.88% to 2.08%, thereby providing a sufficient dosage of the lithium supplement additive for the positive electrode slurry.

### [Positive electrode slurry]

Another embodiment of this application provides a positive electrode slurry. The positive electrode slurry includes a positive active material and a lithium supplement slurry. The lithium supplement slurry is the lithium supplement slurry according to any embodiment of the first aspect.

The lithium supplement slurry uses a phosphate ester compound as a solvent. The phosphate ester compound is stable at a normal temperature, and does not react with the lithium supplement additive. Therefore, in a positive electrode slurry that uses the phosphate ester compound for supplementing lithium, the phosphate ester compound does not make the slurry prone to gel, but makes the positive electrode slurry meet performance requirements on an industrial mass-produced slurry, and makes it easy to apply the supply to form a coating layer. In addition, the phosphate ester compound is of low toxicity and high safety in production.

The dosage of the lithium supplement additive in the positive electrode slurry of this application may be learned with reference to the prior art. In some embodiments of this aspect, the mass percent of the lithium supplement additive in relation to the positive active material is 1% to 10%, and further optionally 1% to 3%, thereby implementing sufficient pre-lithiation for the negative electrode, and ensuring a high capacity density of the positive electrode material.

The dosage of the solvent in the positive electrode slurry of this application may also be determined with reference to the dosage in the positive electrode slurry in the prior art. In some embodiments, the mass percent of the phosphate ester solvent in the lithium supplement slurry based on the mass of the positive electrode slurry is 50% to 70%, and optionally 52% to 58%, and/or, the mass percent of the lithium supplement additive in positive electrode slurry is 0.45% to 2.88%, and optionally 0.46% to 1.20%. In other words, the mass ratio between the phosphate ester solvent in the lithium supplement slurry and the dry material of the positive electrode slurry is (1.05 to 2.05): 1, and optionally (1.09 to 1.36): 1. When the dosage falls within the above range, the formed positive electrode slurry is of a moderate viscosity and easy to apply, and improves the drying efficiency of the applied slurry.

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811)), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive electrode slurry further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin. In some embodiments, the binder accounts for 0.7 wt% to 2.5 wt% of the positive electrode slurry system.

In some embodiments, the positive electrode slurry further optionally includes a conductive agent. As an example, the conductive agent may include at least one of superconductive carbon, acetylene black, carbon black, Ketjen black, carbon dots, carbon nanotubes, graphene, or carbon nanofibers. In some embodiments, the conductive agent accounts for 0.7 wt% to 2.5 wt% of the positive electrode slurry system.

On the one hand, the gelation of the positive electrode slurry can be visually observed. On the other hand, the viscosity of the gelled slurry increases. The positive electrode slurry in some embodiments of this application is still flowable after being stored for 24 hours, and the viscosity is 5000 mP·s to 35000 mP·s suitable for coating. Therefore, the positive electrode slurry is highly suitable for coating, and ensures uniformity of the precursor of the formed positive film layer.

Method for measuring the viscosity of the slurry: Taking 500 mL fresh slurry in a beaker, using an IKAROTAVISC lo-vi Complete viscometer to test the viscosity at a temperature of 25 °C. Configuring No. 4 rotor (the diameter of the rotor is 3 mm), and adjusting a distance by which the rotor is immersed in the slurry. Setting the rotation speed to 6 r/min, and setting the test duration to 5 min. Recording the viscosity readout on the viscosity tester as the viscosity of the slurry after completion of the test.

### [Secondary battery]

A secondary battery, also known as a rechargeable battery or storage battery, is a battery that is reusable after an active material in the battery is activated by charging the battery that has been discharged.

Generally, a secondary battery includes a positive electrode plate, a negative electrode plate, a separator, and an electrolyte solution. During charge and discharge of the battery, active ions (such as lithium ions) are shuttled between the positive electrode plate and the negative electrode plate by intercalation and deintercalation. Disposed between the positive electrode plate and the negative electrode plate, the separator primarily serves to prevent a short circuit between the positive electrode plate and the negative electrode plate while allowing passage of active ions. The electrolyte solution is located between the positive electrode plate and the negative electrode plate, and primarily serves to conduct the active ions.

A positive electrode plate generally includes a positive current collector and a positive film layer applied on at least one surface of the positive current collector. The positive film layer includes a positive active material, a lithium supplement additive, and a phosphate ester compound. The phosphate ester compound is a residual solvent.

As an example, the positive current collector includes two surfaces opposite to each other in a thickness direction of the positive current collector. The positive film layer is disposed on either or both of the two opposite surfaces of the positive current collector.

In a process of forming the positive film layer by using the positive electrode slurry, residual solvent inevitably exists. The residual solvent of the positive film layer in the secondary battery of this application is a phosphate ester compound. That is, the positive electrode slurry that forms the positive film layer uses a phosphate ester compound as a solvent. The phosphate ester compound is stable at a normal temperature, and does not react with the lithium supplement additive, and therefore, will not cause gelation of the positive electrode slurry. Therefore, the positive electrode slurry of this application meets performance requirements on an industrial mass-produced slurry. The lithium supplement additive in the positive film layer of the secondary battery of this application is evenly dispersed and dissolved at a relatively high decomposition rate, and can exert a sufficient lithium supplementation effect.

In some embodiments, the mass percent of the phosphate ester compound in the positive film layer is less than or equal to 2%. Such a residual amount does not affect the performance of the secondary battery. Optionally, the phosphate ester compound includes a phosphate triester compound. Optionally, the phosphate ester compound includes triethyl phosphate and/or trimethyl phosphate. All such phosphate ester compounds are liquid substances highly flowable at a normal temperature, and are of relatively high chemical stability, thereby ensuring uniformity of the slurry applied on a device.

The residual solvent in the positive film layer may be measured by the following method 1):

Determining the residual amount of triethyl phosphate (TEP) in the electrode plate of the lithium-ion battery based on gas chromatography by ultrasonically extracting and pretreating the solvent. Specifically, ultrasonically extracting the solvent from the electrode plate of the battery by use of ethanol, and filtering the solvent through an organic filter film. Measuring the amount of the residual solvent by use of a gas chromatograph, and quantitating the residual amount by means of external standard quantitation.

In some embodiments, the thickness of the positive film layer is 40 µm to 60 µm, and optionally 45 µm to 55 µm. In the positive film layer of a thickness falling within the above range, the decomposition rate of the lithium supplement additive is relatively high, and therefore, improves the lithium supplement effect. The thickness of the positive film layer is the thickness of the positive film layer on a single side.

The lithium supplement additive used in this application may be any lithium supplement additive that can achieve the lithium supplementation effect. In some embodiments, the lithium supplement additive includes one or more of lithium nitride, lithium ferrite, lithium nickelate, or lithium oxide. Optionally, a mass percent of the lithium supplement additive in the positive film layer is 0.95% to 8.68%, and further optionally 0.96% to 2.83%. In the lithium supplement slurry of this application, the lithium supplement additive does not react with the solvent, thereby avoiding gelation of the lithium supplement slurry. Preferably, the lithium supplement additive necessarily contains lithium nitride. The decomposition rate of lithium nitride in the lithium-nitride-containing positive electrode plate formed by applying the lithium supplement slurry of this application is relatively high. Therefore, the capacity exerted by the lithium nitride is relatively high.

The mass of the lithium supplement additive in the positive film layer may be determined by a method known in the art. For example, the mass of the lithium supplement agent is equal to the capacity of the lithium supplement additive divided by the specific capacity of the lithium supplement additive, where the capacity of the lithium supplement additive is equal to the total capacity of the battery minus the total capacity of the positive active material.

The mass percent of the lithium supplement additive in the positive film layer is equal to the mass of the lithium supplement additive divided by the mass of the positive film layer, multiplied by 100%.

In any embodiment of the third aspect, after the battery is initially charged, an average decomposition rate of the lithium supplement additive is greater than or equal to 60%, and optionally 62% to 94%. In this way, the lithium supplementation effect of the lithium supplement additive is exerted sufficiently. The decomposition rate of the lithium supplement additive is equal to the actual specific capacity of the lithium supplement additive divided by the theoretical specific capacity of the lithium supplement additive.

The initial charge for the battery means charging a button battery for a first time. In the button battery, the positive electrode plate is a circular positive electrode plate of this application, the negative electrode plate is a circular lithium sheet, the separator is a polyethylene separator, and the volume ratio between ethylene carbonate (EC), ethyl methyl carbonate (EMC), and diethyl carbonate (DEC) in the electrolyte solution is 1: 1: 1, in which the concentration of LiPF₆ is 1 mol/L.

The conditions for the initial charge are, for example: leaving the battery to stand for 5 minutes, charging the battery at a constant current rate of 0.1 C until the voltage reaches 4.7 V, and then charging the battery at a constant voltage (CV) until the current drops to 0.02 C. Leaving the battery to stand for 5 minutes, discharging the battery at a current rate of 0.1 C until the voltage reaches 2.0 V, and then leaving the battery to stand 60 minutes.

In some embodiments, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

### [Secondary battery preparation method]

The preparation method includes a preparation process of the positive electrode plate. The preparation process includes: applying the positive electrode slurry according to any one of the foregoing embodiments onto a positive current collector, and drying the slurry to obtain the positive electrode plate.

With the phosphate ester compound used as a solvent in the positive electrode slurry, the phosphate ester compound is stable at a normal temperature, and does not react with the lithium supplement additive, and therefore, the positive electrode slurry is not prone to gelation. Therefore, the performance of the positive electrode slurry of this application meets requirements on an industrial mass-produced slurry. The lithium supplement additive in the positive film layer of the secondary battery formed by using such a slurry is evenly dispersed and dissolved at a relatively high decomposition rate, and can exert a sufficient lithium supplementation effect. In addition, the phosphate ester compound is of low toxicity and high safety in production.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold calendering to obtain the positive electrode plate.

Unless otherwise specified, the drying is carried out under the condition that the humidity is less than 2%.

In some embodiments, the drying is performed in an inert gas, and optionally, the inert gas is nitrogen or argon. The decomposition rate of the lithium supplement additive in the positive film layer of the secondary battery obtained by drying the slurry in an inert gas is relatively high, and therefore, the lithium supplementation effect is better.

Alternatively, in some embodiments, the drying is performed in a vacuum environment. Optionally, a vacuum pressure of the vacuum environment is -20 KPa to -90 KPa. This can also achieve a relatively high decomposition rate of the lithium supplement additive.

### [Negative electrode plate]

The negative electrode plate includes a negative current collector and a negative film layer disposed on at least one surface of the negative current collector. The negative film layer includes a negative active material.

As an example, the negative current collector includes two surfaces opposite to each other in a thickness direction of the negative current collector. The negative film layer is disposed on either or both of the two opposite surfaces of the negative current collector.

In some embodiments, the negative current collector may be a metal foil or a composite current collector. For example, the metal foil may be a copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well known for use in a battery in the art. As an example, the negative active material may include at least one of the following materials: artificial graphite, natural graphite, soft carbon, hard carbon, silicon-based material, tin-based material, lithium titanium oxide, and the like. The silicon-based material may be at least one selected from simple-substance silicon, a silicon-oxygen compound, a silicon-carbon composite, a silicon-nitrogen composite, and a silicon alloy. The tin-based material may be at least one selected from simple-substance tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In some embodiments, the negative film layer further optionally includes a binder. As an example, the binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative film layer further optionally includes a conductive agent. As an example, the conductive agent may be at least one selected from superconductive carbon, acetylene black, carbon black, Ketjen black, carbon dots, carbon nanotubes, graphene, or carbon nanofibers.

In some embodiments, the negative film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

### [Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is in a liquid state and includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes an additive. As an example, the additive may include a negative film-forming additive or a positive film-forming additive. The additive may further include an additive capable of improving some performance of the battery, for example, an additive for improving overcharge performance of the battery, or an additive for improving high- or low-temperature performance of the battery.

### [Separator]

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

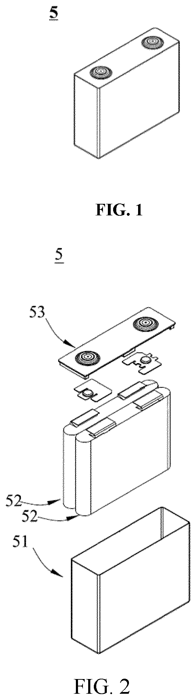

The shape of the secondary battery is not particularly limited in this application, and may be cylindrical, prismatic or any other shape. FIG. 1 shows a prismatic secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is created on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

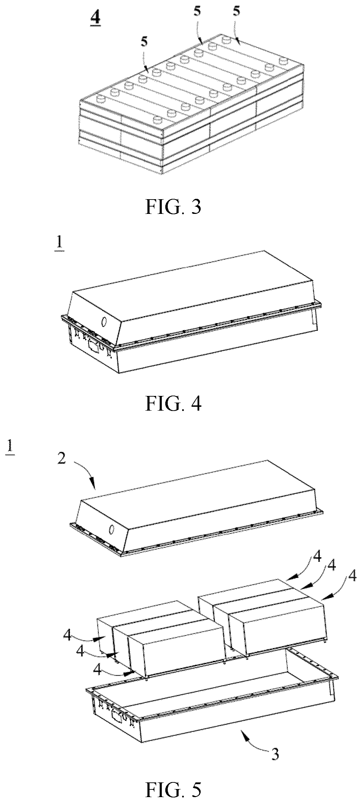

FIG. 3 shows a battery module 4 as an example. Referring to FIG. 3, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

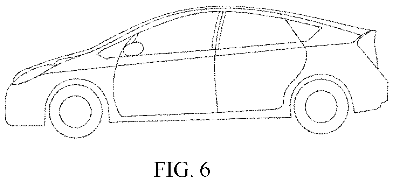

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

### Preparing a positive electrode plate

Mixing well lithium iron phosphate (LFP) as a positive active material, Li₃N as a positive lithium supplement additive, Super P as a conductive agent, and PVDF as a binder at a mass ratio of 97: 0.97: 2.0: 1.0 in a specified amount of triethyl phosphate (TEP) to obtain a positive electrode slurry. Adding the triethyl phosphate in such a way that the mass percent of Li₃N in the lithium supplement slurry is 0.88%, the mass percent of Li₃N in the positive electrode slurry is 0.46%, and the mass percent of the triethyl phosphate in the positive electrode slurry is approximately 52.14%. Applying the positive electrode slurry on the 2 surfaces of the positive current collector aluminum foil to form a positive film layer. Drying the slurry in air at 80 °C for 200 minutes, and then cold-pressing the electrode plate to obtain a positive electrode plate. The thickness of the positive film layer on a single side is 52 µm, the areal density of the positive electrode plate is 0.22 mg/cm², and the compaction density of the positive electrode plate is 2.3 g/cm³.

### Preparing a separator

Using a polyethylene film as a separator.

### Preparing an electrolyte solution

Mixing ethylene carbonate (EC), ethyl methyl carbonate (EMC), and diethyl carbonate (DEC) at a volume ratio of 1: 1: 1, and dissolving LiPF₆ in the forgoing solution homogeneously to obtain an electrolyte solution. In the electrolyte solution, the concentration of the LiPF₆ is 1 mol/L.

### Preparing a button battery

Die-cutting the positive electrode plate to obtain small discs, each disc serving as a working electrode. Using a lithium sheet as a counter electrode. Assembling the small disc of the positive electrode plate, the separator, the lithium sheet, and the electrolyte solution together to form a button battery.

### Embodiment 2

Differences from Embodiment 1 are: Mixing well lithium iron phosphate (LFP) as a positive active material, Li₃N as a positive lithium supplement additive, Super P as a conductive agent, and PVDF as a binder at a mass ratio of 97: 2.91: 2.0: 1.0 in a specified amount of triethyl phosphate (TEP) to obtain a positive electrode slurry. Adding the triethyl phosphate in such a way that the mass percent of Li₃N in the lithium supplement slurry is 2.08%, the mass percent of Li₃N in the positive electrode slurry is 1.20%, and the mass percent of the triethyl phosphate in the positive electrode slurry is approximately 57.63%.

The rest is the same as that in Embodiment 1.

### Embodiment 3

Differences from Embodiment 1 are: Mixing well lithium iron phosphate (LFP) as a positive active material, Li₃N as a positive lithium supplement additive, Super P as a conductive agent, and PVDF as a binder at a mass ratio of 95: 4.75: 2.5: 2.5 in a specified amount of triethyl phosphate (TEP) to obtain a positive electrode slurry. Adding the triethyl phosphate in such a way that the mass percent of Li₃N in the lithium supplement slurry is 2.64%, the mass percent of Li₃N in the positive electrode slurry is 1.67%, and the mass percent of the triethyl phosphate in the positive electrode slurry is approximately 63.21%.

The rest is the same as that in Embodiment 1.

### Embodiment 4

Differences from Embodiment 1 are: Mixing well lithium iron phosphate (LFP) as a positive active material, Li₃N as a positive lithium supplement additive, Super P as a conductive agent, and PVDF as a binder at a mass ratio of 95: 9.5: 2.5: 2.5 in a specified amount of triethyl phosphate (TEP) to obtain a positive electrode slurry. Adding the triethyl phosphate in such a way that the mass percent of Li₃N in the lithium supplement slurry is 4.32%, the mass percent of Li₃N in the positive electrode slurry is 2.88%, and the mass percent of the triethyl phosphate in the positive electrode slurry is approximately 66.77%.

The rest is the same as that in Embodiment 1.

### Embodiment 5

Differences from Embodiment 1 are: Coating a surface of the positive current collector aluminum foil with the positive electrode slurry, drying the slurry by means of infrared radiation under a relative vacuum pressure of -20 KPa for 200 minutes, and then performing cold pressing to obtain a positive electrode plate.

The rest is the same as that in Embodiment 1.

### Embodiment 6

Differences from Embodiment 1 are: Coating a surface of the positive current collector aluminum foil with the positive electrode slurry, drying the slurry by means of infrared radiation under a relative vacuum pressure of -40 KPa for 200 minutes, and then performing cold pressing to obtain a positive electrode plate.

The rest is the same as that in Embodiment 1.

### Embodiment 7

Differences from Embodiment 1 are: Coating a surface of the positive current collector aluminum foil with the positive electrode slurry, drying the slurry by means of infrared radiation under a relative vacuum pressure of -60 KPa for 200 minutes, and then performing cold pressing to obtain a positive electrode plate.

The rest is the same as that in Embodiment 1.

### Embodiment 8

Differences from Embodiment 1 are: Coating a surface of the positive current collector aluminum foil with the positive electrode slurry, drying the slurry by means of infrared radiation under a relative vacuum pressure of -84 KPa for 200 minutes, and then performing cold pressing to obtain a positive electrode plate.

The rest is the same as that in Embodiment 1.

### Embodiment 9

Differences from Embodiment 1 are: Coating a surface of the positive current collector aluminum foil with the positive electrode slurry, drying the slurry at 80 °C in an argon atmosphere for 200 minutes, and then performing cold pressing to obtain a positive electrode plate.

The rest is the same as that in Embodiment 1.

### Embodiment 10

Differences from Embodiment 2 are: Coating a surface of the positive current collector aluminum foil with the positive electrode slurry, drying the slurry at 80 °C in an argon atmosphere for 200 minutes, and then performing cold pressing to obtain a positive electrode plate.

The rest is the same as that in Embodiment 1.

### Embodiment 11

Differences from Embodiment 3 are: Coating a surface of the positive current collector aluminum foil with the positive electrode slurry, drying the slurry at 80 °C in an argon atmosphere for 200 minutes, and then performing cold pressing to obtain a positive electrode plate.

The rest is the same as that in Embodiment 1.

### Embodiment 12

Differences from Embodiment 4 are: Coating a surface of the positive current collector aluminum foil with the positive electrode slurry, drying the slurry at 80 °C in an argon atmosphere for 200 minutes, and then performing cold pressing to obtain a positive electrode plate.

The rest is the same as that in Embodiment 1.

### Embodiment 13

Differences from Embodiment 9 are: Mixing well lithium iron phosphate (LFP) as a positive active material, Li₃N as a positive lithium supplement additive, Super P as a conductive agent, and PVDF as a binder at a mass ratio of 97: 0.97: 2.0: 1.0 in a specified amount of triethyl phosphate (TEP) to obtain a positive electrode slurry. Adding the triethyl phosphate in such a way that the mass percent of Li₃N in the lithium supplement slurry is 0.75%, the mass percent of Li₃N in the positive electrode slurry is 0.42%, and the mass percent of the triethyl phosphate in the positive electrode slurry is approximately 56.15%.

The rest is the same as that in Embodiment 9.

### Embodiment 14

Differences from Embodiment 9 are: Mixing well lithium iron phosphate (LFP) as a positive active material, Li₃N as a positive lithium supplement additive, Super P as a conductive agent, and PVDF as a binder at a mass ratio of 97: 0.97: 2.0: 1.0 in a specified amount of triethyl phosphate (TEP) to obtain a positive electrode slurry. Adding the triethyl phosphate in such a way that the mass percent of Li₃N in the lithium supplement slurry is 5.0%, the mass percent of Li₃N in the positive electrode slurry is 0.81%, and the mass percent of the triethyl phosphate in the positive electrode slurry is approximately 16.12%.

The rest is the same as that in Embodiment 9.

### Embodiment 15

Differences from Embodiment 9 are: Using trimethyl phosphate instead of triethyl phosphate as a solvent; and coating a surface of the positive current collector aluminum foil with the positive electrode slurry, drying the slurry at 50 °C in an argon atmosphere for 200 minutes, and then performing cold pressing to obtain a positive electrode plate.

The rest is the same as that in Embodiment 9.

### Embodiment 16

Differences from Embodiment 9 are: Using lithium nitride of equimolar lithium as a solvent in place of lithium ferrite. The rest is the same as that in Embodiment 9.

### Embodiment 17

Differences from Embodiment 9 are: Using lithium nickelate of equimolar lithium as a solvent in place of lithium nitride. The rest is the same as that in Embodiment 9.

### Embodiment 18

Differences from Embodiment 9 are: Using lithium oxide of equimolar lithium as a solvent in place of lithium nitride. The rest is the same as that in Embodiment 9.

### Comparative Embodiment 1

Differences from Embodiment 1 are: Using NMP instead of triethyl phosphate. The rest is the same as that in Embodiment 1.

### Comparative Embodiment 2

Differences from Embodiment 5 are: Using NMP instead of triethyl phosphate. The rest is the same as that in Embodiment 5.

### Comparative Embodiment 3

A difference from Embodiment 9 is: using NMP instead of triethyl phosphate. The rest is the same as that in Embodiment 9. The different operations are described below.

Observing whether the slurry is gelled after the positive electrode slurry of each embodiment and each comparative embodiment is formed, and recording the result in Table 1. In addition, ultrasonically extracting the phosphate ester compound solvent from the positive electrode plate by use of ethanol, and filtering the solvent through an organic filter film. Measuring the amount of the phosphate ester compound by use of a gas chromatograph, and quantitating the compound by means of external standard quantitation. Calculating the content of the phosphate ester compound in the positive film layer, and recording the result in Table 1.

### Determining the decomposition rate of lithium nitride:

Measuring the cycle performance of the button battery prepared in each embodiment and each comparative embodiment by performing the following charge and discharge process: Leaving the battery to stand for 5 minutes, charging the battery at a constant current rate of 0.1 C until the voltage reaches 4.7 V, and then charging the battery at a constant voltage (CV) until the current drops to 0.02 C. Leaving the battery to stand for 5 minutes, discharging the battery at a current rate of 0.1 C until the voltage reaches 2.0 V, and then leaving the battery to stand 60 minutes.

The decomposition rate of lithium nitride is equal to the actual specific capacity of lithium nitride divided by the theoretical specific capacity of lithium nitride, multiplied by 100%.

The actual capacity of lithium nitride is equal to the total capacity of the battery measured at the end of the first cycle minus the capacity of the positive active material. The actual specific capacity of lithium nitride is equal to the actual capacity of lithium nitride divided by the mass of lithium nitride. The theoretical specific capacity of lithium nitride is 2300 mAh/g. The decomposition rate of lithium nitride is recorded in Table 1.

**Table 1**

| | Mass percent of lithium supplement additive in positive film layer | Mass percent of phosphate ester compound in positive film layer | Average decomposition rate of lithium supplement additive | Positive electrode slurry gelled? |
|---|---|---|---|---|
| Embodiment 1 | 0.96% | 0.65% | 34.13% | No |
| Embodiment 2 | 2.83% | 0.72% | 32.55% | No |
| Embodiment 3 | 4.53% | 0.97% | 23.63% | No |
| Embodiment 4 | 8.68% | 1.45% | 8.42% | No |
| Embodiment 5 | 0.96% | 0.68% | 58.23% | No |
| Embodiment 6 | 0.96% | 0.70% | 62.80% | No |
| Embodiment 7 | 0.96% | 0.72% | 65.55% | No |
| Embodiment 8 | 0.96% | 0.75% | 68.82% | No |
| Embodiment 9 | 0.96% | 0.89% | 94.33% | No |
| Embodiment 10 | 2.83% | 0.93% | 64.55% | No |
| Embodiment 11 | 4.53% | 1.37% | 31.69% | No |
| Embodiment 12 | 8.68% | 1.56% | 9.22% | No |
| Embodiment 13 | 0.96% | 0.63% | 23.83% | No |
| Embodiment 14 | 0.96% | 1.59% | 30.73% | No |
| Embodiment 15 | 0.96% | 0.73% | 33.54% | No |
| Embodiment 16 | - | 0.65% | 34.84% | No |
| Embodiment 17 | - | 0.71% | 35.96% | No |
| Embodiment 18 | - | 0.69% | 32.52% | No |
| Comparative Embodiment 1 | 0.96% | No phosphate ester compound is contained. The mass percent of NMP is 0.69%. | 18.33% | Yes |
| Comparative Embodiment 2 | 0.96% | No phosphate ester compound is contained. The mass percent of NMP is 0.72%. | 18.95% | Yes |
| Comparative Embodiment 3 | 0.96% | No phosphate ester compound is contained. The mass percent of NMP is 0.83%. | 20.40% | Yes |

As can be seen from the data in the table, the batteries of Embodiments 1 to 18 use the lithium supplement additive in conjunction with the phosphate ester compound, thereby effectively alleviating the gelation of the slurry, and in turn, improving uniformity of the positive film layer, and, increasing the decomposition rate of the lithium supplement additive significantly, and in turn, increasing the energy density of the battery.

In Comparative Embodiments 1 to 3, no phosphate ester compound is employed, and the positive electrode slurry is gelled, thereby leading to uneven coating in industrial applications, impairing the uniformity of the positive film layer and the adhesion between the positive film layer and the positive current collector, and in turn, impairing the performance of the battery, and in addition, leading to a relatively low decomposition rate of the lithium supplement additive.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A lithium supplement slurry, comprising a lithium supplement additive and a phosphate ester compound.

2. The lithium supplement slurry according to claim 1, wherein the phosphate ester compound comprises a phosphate triester compound; and
optionally, the phosphate ester compound comprises triethyl phosphate and/or trimethyl phosphate.

3. The lithium supplement slurry according to claim 1 or 2, wherein the lithium supplement additive comprises one or more of lithium nitride, lithium ferrite, lithium nickelate, or lithium oxide.

4. The lithium supplement slurry according to any one of claims 1 to 3, wherein a mass percent of the lithium supplement additive in the lithium supplement slurry is 0.75% to 4.32%, and optionally 0.88% to 2.08%.

5. A positive electrode slurry, comprising a positive active material and a lithium supplement slurry, wherein the lithium supplement slurry is the lithium supplement slurry according to any one of claims 1 to 4.

6. The positive electrode slurry according to claim 5, wherein a mass percent of the lithium supplement additive in relation to the positive active material is 1% to 10%, and optionally 1% to 3%.

7. The positive electrode slurry according to claim 5 or 6, wherein
the mass percent of the phosphate ester compound in the positive electrode slurry is 50% to 70%, and optionally 52% to 58%; and/or
a mass percent of the lithium supplement additive in the positive electrode slurry is 0.45% to 2.88%, and further optionally 0.46% to 1.20%.

8. The positive electrode slurry according to any one of claims 5 to 7, wherein the positive electrode slurry further comprises a binder and/or a conductive agent.

9. A secondary battery, comprising a positive electrode plate, a negative electrode plate, and a separator, wherein the positive electrode plate comprises a positive current collector and a positive film layer disposed on a surface of the positive current collector, and the positive film layer comprises a positive active material, a lithium supplement additive, and a phosphate ester compound.

10. The secondary battery according to claim 9, wherein the phosphate ester compound comprises a phosphate triester compound;
optionally, the phosphate ester compound comprises triethyl phosphate and/or trimethyl phosphate; and
optionally, a mass percent of the phosphate ester compound in the positive film layer is less than or equal to 2%.

11. The secondary battery according to claim 9 or 10, wherein a thickness of the positive film layer is 40 µm to 60 µm, and optionally 45 µm to 55 µm.

12. The secondary battery according to any one of claims 9 to 11, wherein the lithium supplement additive comprises one or more of lithium nitride, lithium ferrite, lithium nickelate, or lithium oxide; and
optionally, a mass percent of the lithium supplement additive in the positive film layer is 0.95% to 8.68%, and further optionally 0.96% to 2.83%.

13. The secondary battery according to any one of claims 9 to 12, wherein, after the battery is initially charged, an average decomposition rate of the lithium supplement additive is greater than or equal to 60%, and optionally 62% to 94%.

14. A secondary battery preparation method, comprising a preparation process of a positive electrode plate, wherein the preparation process of the positive electrode plate comprises:
applying the positive electrode slurry according to any one of claims 5 to 7 onto a positive current collector, and drying the slurry to obtain the positive electrode plate.

15. The preparation method according to claim 14, wherein a solid content of the positive electrode slurry is 30% to 60%, and optionally 40% to 50%.

16. The preparation method according to claim 14 or 15, wherein the drying is performed in an inert gas, and optionally, the inert gas is nitrogen or argon.

17. The preparation method according to any one of claims 14 to 16, wherein the drying is performed in a vacuum environment, and optionally, a vacuum pressure of the vacuum environment is -20 KPa to -90 KPa.

18. An electrical device, comprising a secondary battery, wherein the secondary battery is selected from the secondary battery according to any one of claims 9 to 13 or a secondary battery prepared by the preparation method according to any one of claims 14 to 17.
